# EUROPEAN PATENT APPLICATION

(11) **EP 4 617 251 A1**
(43) Date of publication of application: **17.09.2025**
(21) Application number: 24163957.4
(22) Date of filing: 15.03.2024
(51) Int. Cl.: C05C 1/00, C05D 5/00, C05C 5/00, C05C 5/04, C05D 9/02, C05G 5/12

(54) **CALCIUM NITRATE FERTILIZER CONTAINING MAGNESIUM AND METHOD OF MANUFACTURE THEREOF**

(71) Applicant: Yara International ASA, 0277 Oslo (NO)
(72) Inventor: Mutsaers, Petrus Cornelis Maria, 3157 Barkåker (NO); Rangel Becerra, Andres Felipe, 48249 Dülmen (DE); Myrstad, Amund, 3711 Skien (NO); Donkers, Ellen Henrica Diana, 4533 HS Terneuzen (NL)
(74) Representative: AWA Sweden AB

(57) **Abstract**

The present disclosure provides a method for producing a solid, particulate composition comprising homogeneous particles wherein the solid, particulate composition comprises from 1.0 to 10 weight% of magnesium but less than 1.0 weight% of magnesium nitrate. The present disclosure also provides a composition comprising calcium nitrate, and the use of this composition as a fertilizer.

## Description

### Field of the disclosure

The present disclosure is related to the field of fertilizers, in particular a fertilizer composition comprising calcium nitrate.

### Background information

Plants and crops require several nutrients to grow. These nutrients are classified in three categories: primary nutrients (nitrogen - N, phosphorus - P, and potassium - K), secondary nutrients (calcium - Ca, magnesium - Mg, and sulphur - S), and micronutrients (iron - Fe, copper - Cu, molybdenum - Mo, manganese - Mn, boron - B, and zinc - Zn). These nutrients are naturally found in soils but often not in enough quantities to ensure optimal growth of the crops. Farmers often supply additional nutrients via the application of fertilizer products.

Fertilizer products may be solid or liquid and may contain one or more nutrients. Fertilizer products containing more than one nutrient are interesting because they reduce the workload of the farmer by supplying different nutrients in only one application.

Calcium nitrate-based products provide at least two nutrients to the crop, nitrogen and calcium, and are widely available today. Calcium nitrate is very soluble in water (1.2 kg/L at 25 °C), so it readily decomposes in soils if moisture is present, and it can be used in fertigation. Homogeneous particles of calcium nitrate can be prepared by different techniques with a high quality. Calcium nitrate products containing more than calcium and nitrogen are commercially available today, such as YaraLiva Nitrabor that contains calcium, nitrogen, and boron. However, there is a constant requirement from the farmers to provide new products containing new combinations of nutrients.

### Summary of the disclosure

It was found that the addition of magnesium oxide to a melt comprising calcium nitrate and optionally ammonium nitrate, lead to the generation of several magnesium-containing species with a wide spectrum of water solubilities. The product obtained acts as a source of fast-released and slow-released magnesium.

The present disclosure provides a method for producing a solid, particulate composition comprising homogeneous particles, wherein the homogeneous particles comprise calcium nitrate, and magnesium.

In a first aspect, the present disclosure provides a method for producing a solid, particulate composition comprising homogeneous particles, wherein the solid, particulate composition comprises from 1.0 to 10 weight% of magnesium, based on the total weight of the solid, particulate composition, the method comprising the steps of:
a) providing a melt comprising from 50 to 100 weight% of calcium nitrate, and from 0 to 1.0 weight% of a strong acid;
b) adding magnesium oxide to the melt provided in step a);
c) mixing the melt obtained in step b) thereby obtaining a homogeneous melt; and
d) solidifying the homogeneous melt obtained in step c) into a solid, particulate composition comprising homogeneous particles.

In a second aspect, the present disclosure provides a solid, homogeneous particle comprising from 10 to 20 weight% of nitrogen, from 15 to 30 weight% of calcium (expressed as CaO), and from 1.0 to 10 weight% of magnesium (expressed as MgO), based on the total weight of the particle.

In a third aspect, the present disclosure provides the use of a solid, particulate composition comprising the solid, homogeneous particles according to the first aspect as a fertilizer.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a component" refers to one or more than one component.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

Magnesium is a secondary nutrient involved in several processes in plants, such as chlorophyll synthesis, production, transportation, and utilization of photo-assimilates, enzyme activation, and protein synthesis. It is very abundant in nature, but it is mostly present in complex minerals and not available to crops that can only absorb magnesium as Mg²⁺ cations. Different crops require different levels of magnesium for optimal growth, but some crops, such as coffee and citrus fruits, require a large amount, and farmers often apply magnesium sources, such as kieserite, a natural magnesium sulfate monohydrate mineral, in their fields.

Magnesium oxide is the solid with the highest magnesium content (60 weight%) among commercial magnesium sources. However, it is almost completely insoluble in water, limiting its direct use as a magnesium source in agriculture.

However, it was found that when magnesium oxide is added to a melt comprising calcium nitrate, new magnesium-containing species are formed that are very or mildly soluble in water and in acidic aqueous solutions and are suitable to be absorbed by plants.

In a first aspect, the present disclosure provides a method for producing a solid, particulate composition comprising homogeneous particles, wherein the solid, particulate composition comprises from 1.0 to 10 weight% of magnesium, based on the total weight of the solid, particulate composition, the method comprising the steps of:
a) providing a melt comprising from 50 to 100 weight% of calcium nitrate, and from 0 to 1.0 weight% of a strong acid;
b) adding magnesium oxide to the melt provided in step a);
c) mixing the melt obtained in step b) thereby obtaining a homogeneous melt; and
d) solidifying the homogeneous melt obtained in step c) into a solid, particulate composition comprising homogeneous particles.

The most common method to prepare a solid, particulate fertilizer composition involves the solidification of a melt, which is a liquid composition comprising components, such as inorganic salts, heated above the melting point of the composition.

Different solidification techniques are known in the field, and different apparatuses are also known to perform these techniques, such as granulators, for example drum granulator, pan granulator, and fluidized bed granulator, prilling tower, pugmill, spherodizer and pastillator.

Due to the specific nutrient requirements of some crops, such as coffee, lemons, and oranges, it was desirable to prepare a solid, particulate composition comprising homogeneous particles comprising calcium nitrate as the main component, in particular at least 50 %, 60%, 70%, 80%, or even 90% of calcium nitrate, and at least 1.0 weight% of magnesium.

Magnesium salts, such as magnesium nitrate and magnesium sulfate, are suitable sources of magnesium for use as fertilizers. These salts have a high water-solubility and provide another nutrient in addition to magnesium, for example nitrogen for magnesium nitrate and sulfur for magnesium sulfate. Since these salts are very soluble in water, they dissolve quickly in the soil after their application and become available to the plants. However, this also means that magnesium cations can react quickly with soil constituents and become absorbed so tightly, the ions are then referred to as "fixed" and have a reduced availability to the plants.

Additionally, magnesium nitrate and magnesium sulfate have a lower magnesium content than magnesium oxide. This means that a farmer needs to add more mass to provide the same amount of magnesium to its field, and these two sources are more expensive, per unit of magnesium, than magnesium oxide.

Magnesium oxide is poorly soluble in water and is therefore rarely applied directly to the soil as a magnesium source. However, it was found that when magnesium oxide is added in a melt comprising calcium nitrate, it can partially or fully react to form new magnesium species that have a higher water solubility than magnesium oxide. Different types of magnesium oxide are commercially available, they all contain magnesium and oxygen as the main components, and they are usually produced by calcination of magnesium carbonate. However, it was observed that different commercial MgO sources exhibit different reactivities, for example in aqueous solutions, and/or when added to a melt comprising calcium nitrate as main component.

The method according to the first aspect starts with a melt comprising from 50 to 100 weight% of calcium nitrate, based on the total weight of the melt. Such a melt can be prepared by different methods known in the field. A commonly used method comprises heating up crystals of calcium nitrate or solids containing from 50 to 100 weight% of calcium nitrate.

In some embodiments, the melt provided in step a) comprises from 60 to 100 weight%, from 70 to 100 weight%, from 80 to 100 weight%, or from 90 to 100 weight% of calcium nitrate, based on the total weight of the melt. In some embodiments, the melt comprises from 60 to 90 weight%, from 70 to 90 weight%, from 80 to 90 weight%, or from 90 to 95 weight% of calcium nitrate. Calcium nitrate may be mixed with other components, such as other nutrient sources.

In some embodiments, the melt provided in step a) comprises from 0.1 to 20 weight%, from 0.1 to 10 weight%, from 1.0 to 8.0 weight%, from 0.1 to 5.0 weight%, or from 1.0 to 5.0 weight% of ammonium nitrate, based on the total weight of the melt. During the production of calcium nitrate, it may be that the calcium nitrate solution contains an excess of acid, for example nitric acid or phosphoric acid. To neutralize it, it may be advantageous to add ammonia as a base, because the ammonium ions act as nitrogen source for plants as well: they can be directly absorbed by plants or transformed into nitrates in the soil, which are easily absorbed by plants. Therefore, the overall concentration of nutrients in the material does not decrease.

In some embodiments, the melt provided in step a) has a pH ranging from 5.5 to 7.5 or from 6.0 to 7.0. The pH of the melt cannot be measured directly due to the high salt content. To measure the pH, a small sample of the melt is diluted in water, in particular in amount of water equal to 10 times the weight of the melt sample.

The melt provided in step a) comprises from 0 to 1.0 weight% of a strong acid, such as nitric acid, phosphoric acid, and sulfuric acid. The melt comprises no or very little free strong acid. Free strong acids are not suitable in melts due to the high temperature and high reactivity of such acids. An intermediate melt comprising some free strong acid may be prepared, but the free strong acid is neutralized by the addition of a base, such as ammonia, before the addition of magnesium oxide. In some embodiments, the melt provided in step a) is free from any strong acid.

In some embodiments, the melt provided in step a) is prepared by adding a base, such as ammonia, to a melt comprising a strong acid.

As used herein, a strong acid refers to acid which has a pKa below 0. Strong acids include nitric acid, phosphoric acid, sulfuric acid, hydrochloric acid, hydrobromic acid, hydroiodic acid, perchloric acid, and chloric acid.

As used herein, a free acid or free strong acid refers to an acid that is present in its protonated form, for example HNO₃ for nitric acid.

In some embodiments, the melt provided in step a) comprises from 0 to 0.5 weight%, or from 0.01 to 0.5 weight% of the strong acid, such as nitric acid, phosphoric acid, and sulfuric acid.

In some embodiments, the melt provided in step a) comprises from 0 to 0.4 weight%, or from 0.01 to 0.4 weight% of the strong acid, such as nitric acid, phosphoric acid, and sulfuric acid.

In some embodiments, the melt provided in step a) comprises from 0 to 0.3 weight%, or from 0.01 to 0.3 weight% of the strong acid, such as nitric acid, phosphoric acid, and sulfuric acid.

In some embodiments, the melt provided in step a) comprises from 0 to 0.2 weight%, or from 0.01 to 0.2 weight% of the strong acid, such as nitric acid, phosphoric acid, and sulfuric acid.

In some embodiments, the melt is obtained by melting calcium nitrate particles obtained from the nitrophosphate process. The nitrophosphate process involves dissolving phosphate rock in nitric acid. The mixture obtained contains calcium nitrate, phosphoric acid, and nitric acid. The calcium nitrate can be removed from the mixture by crystallization at low temperatures, such as less than 5 °C. The recovered solids contain mostly calcium nitrate, but they may also contain some nitric acid, which is neutralized by the addition of ammonia and forms ammonium nitrate. These crystals can then be heated up to obtain a melt comprising calcium nitrate.

In some embodiments, the melt provided in step a) comprises from 0 to 20 weight%, or from 0 to 15 weight%, or from 0 to 10 weight% of water. A melt comprising calcium nitrate often comprises water. A completely anhydrous melt may have a viscosity too high to be processed efficiently in a production line. Too much water, for example above 20 weight%, may require a lot of energy to remove water from the melt before the solidification step.

In step b) of the method, magnesium oxide is added to the melt provided in step a) such that the solid, particulate composition produced by the method comprises from 1.0 to 10 weight% of magnesium. Magnesium is a secondary nutrient required by crops. The exact amount required by crops depends on factors, such as the nature of the crop and the magnesium content of the soil, but it is considered that a minimum content of 1.0 weight% is suitable for a large number of crops and soils. In some countries, fertilizer products must contain at least 1.4 weight% of magnesium in order to be able to register the product as containing magnesium. In addition, it is usually not required to have a multinutrient fertilizer product with a magnesium content above 10 weight%.

In some embodiments, the solid, particulate composition produced by the method comprises from 1.0 to 6.0 weight%, in particular from 2.0 to 5.0, in particular from 2.5 to 4.5 weight% of magnesium. For some crops, such as coffee and citruses like orange and lemon, it was observed that a higher amount of magnesium or a higher ratio of magnesium/nitrogen, or a higher ratio of magnesium/calcium was better suited for the cultivation of the crops. Therefore, in some embodiments, it is an advantage to increase the amount of magnesium in the final product.

In some embodiments, a source of sulfur is added to the melt comprising calcium nitrate either before, after, or during the addition of magnesium oxide to the melt.

In some embodiments, a source of a micronutrient is added to the melt comprising calcium nitrate either before, after, or during the addition of magnesium oxide to the melt. The micronutrients required by crops are boron, iron, manganese, molybdenum, and zinc.

In some embodiments, a source of boron, such as borax or boric acid, is added to the melt comprising calcium nitrate either before, after, or during the addition of magnesium oxide to the melt.

In step c) of the present method, the melt comprising magnesium oxide is mixed, thereby obtaining a homogeneous melt.

As used herein, a homogeneous material relates to a material where the local concentration in different elements is identical in all parts of the material. However, the material may not necessarily be monophasic, i.e., it may contain chemical compounds in different states. For example, a melt may comprise small solid particles, for example of magnesium salts. Such a melt would be considered homogeneous for the purpose of this disclosure if the solid particles are equally distributed within the liquid phase.

Magnesium oxide is a basic compound, meaning that it can react with acidic components. Upon addition to a melt comprising calcium nitrate and water, the reaction of magnesium oxide raises the pH of the melt. In some embodiments, the melt obtained in step c) has a pH ranging from 8 to 10.0 or from 8.5 to 9.5. The pH of the melt cannot be measured directly due to the high salt content. To measure the pH, a small sample of the melt is diluted in water, in particular in amount of water equal to 10 times the weight of the melt sample.

In some embodiments, the mixing time of step c) is from 5 to 30 minutes, from 5 to 20 minutes, from 10 to 30 minutes, or from 15 to 30 min. The mixing time of step c), i.e., for homogenizing the melt comprising calcium nitrate and magnesium oxide may depend on different factors, such as total weight of the melt, amount of magnesium oxide added to the melt, characteristics of the device comprising the melt (size, mixing capacity, etc.).

For a large range of industrial products, for example fertilizers, it is highly desirable to obtain a homogeneous particulate material. For fertilizers, it allows a uniform distribution of the nutrients in a field in time and space. Homogeneous particulate fertilizers containing micronutrients will supply nutrients to the plants on a longer period of time compared to inhomogeneous fertilizers wherein the micronutrient source is only found in the coating. In order to produce a homogeneous particulate material, a homogeneous melt should be provided.

In step d) of the present method, the homogeneous melt obtained in step c) is solidified into a solid, particulate composition comprising homogeneous particles.

The solidification step may be done in any device selected from the group consisting of a drum granulator, a pan granulator, a fluidized bed granulator, a prilling tower, a pugmill, a spherodizer, and a pastillator. In some embodiments, the solidification step is performed in a fluidized bed granulator. Fluidized bed granulators have been used by fertilizer producers for several decades to manufacture calcium nitrate granules, and very good results in terms of particle size distribution and/or particle strength can be obtained with a fluidized bed granulator. Another advantage of fluidized bed granulators is their capacity to operate at lower temperatures than other types of granulators. In some cases, it was observed that the melt produced in step c) had a solidification temperature between 90 and 100 °C. To solidify a melt, a solidification technique that can operate close to or even below the solidification temperature of the melt is required.

It was found that the particles produced by this method were able to provide a fast-acting source of magnesium, which is the water-soluble magnesium species found in the solubility test (see below), and a slower-acting source of magnesium, which is magnesium species soluble in aqueous ammonium citrate at pH = 7. This is very interesting for farmers as it decreases the number of applications of fertilizer containing magnesium required for the crops, or at least increases the time required between two applications of fertilizer containing magnesium.

In some embodiments, the solid, particulate composition obtained in step d) comprises from 5% to 60%, from 10% to 60%, from 20% to 60%, from 5% to 50%, or from 5% to 40% of water-soluble magnesium, based on the total magnesium content of the solid, particulate composition. The amount of water-soluble magnesium can be measured by adding the composition in water and mix it for a few minutes. The solid particles and the aqueous solution are separated, and the magnesium content of the aqueous solution can be measured using standard techniques, such as atomic absorption spectrometry and inductively coupled plasma spectrometry. It was observed that some of the magnesium oxide added to the melt is transformed into a water-soluble magnesium form. It is hypothesized that the water-soluble magnesium species comprise some magnesium nitrate. The amount of water-soluble magnesium compared to the total content of magnesium may depend on several factors, which include the origin, the method of manufacture, and the particle size distribution of the magnesium oxide used in the method. The particle size distribution influences the kinetic of the conversion of the magnesium oxide: smaller particles offer a greater surface area for interaction with the melt and react faster. Magnesium oxide is often manufactured from natural sources of magnesium carbonate that can have varied compositions. The calcination of magnesium carbonate to magnesium oxide can be performed with varying parameters, which modify the reactivity of the final product.

In some embodiments, the solid, particulate composition comprises from 30% to 100% of magnesium soluble in a neutral aqueous solution of ammonium citrate (pH = 7), based on the total magnesium content of the solid, particulate composition. It has been observed that some or all of the magnesium oxide added into the melt comprising calcium nitrate is transformed into magnesium species that are at least soluble in a neutral aqueous solution of ammonium citrate (pH = 7). Some of the magnesium species soluble in an aqueous solution of ammonium citrate are also soluble in water.

In some embodiments, the solid, particulate composition comprises from 30 to 100 weight%, from 30 to 90 weight%, from 40 to 100 weight%, or from 40 to 90 weight% of magnesium soluble in a neutral aqueous solution of ammonium citrate (pH = 7), based on the total magnesium content of the solid, particulate composition.

A test was designed to measure the reactivity of different sources of magnesium oxide: an aqueous solution containing 28 g/L of citric acid monohydrate, 0.25 g/L of sodium benzoate, and 2 mL/L of phenolphthalein (acting as color indicator) is prepared and heated up to 32 °C. 20 g/L of magnesium oxide is added at t = 0. The reaction is deemed complete when a color change of the solution (blue to pink) is observed.

In some embodiments, the magnesium oxide added in step b) requires between 5 and 30 minutes to dissolve in an aqueous solution containing 28 g/L of citric acid monohydrate. Several sources of magnesium oxide were tested with this method and then used to prepare a solid, particulate composition according to the present method. The time to reach the color change in the test described above varied from 400 seconds up to 30 minutes. It was found that these sources were suitable to be used in the method according to the first aspect, as they allow the preparation of a composition comprising calcium nitrate, fast-release magnesium-containing compounds, and slow-release magnesium-containing compounds. If the reactivity of the magnesium oxide is very low (i.e., reaction time with citric acid over 30 min), it will require a longer mixing time with the calcium nitrate melt, which slows down the production. If the reactivity of the magnesium oxide is too high, the content in slow-release magnesium-containing compounds will decrease.

In some embodiments, the solid, particulate composition in step d) comprises solid, homogeneous particles having an average particle size of from 2.0 to 4.0 mm, as measured by sieving stages.

In some embodiments, the solid, particulate composition obtained in step d) comprises solid, homogeneous particles, wherein 90% of the solid, homogeneous particles have a particle size of from 2.0 to 4.0 mm, as measured by sieving stages.

In some embodiments, the method further comprises the step: e) adding to the melt a source of boron, in particular boron oxide or borax, wherein step e) occurs between step a) and step b), between step b) and step c), or during step b). Boron is a micronutrient required by crops. It was found to be beneficial for certain crops to receive boron at the same time as calcium and magnesium. It was found that borax and boron oxide were suitable boron sources to be added in a melt containing calcium nitrate.

In some embodiments, the solid, particulate composition produced by the method comprises from 0.1 to 1.0 weight% of boron. Boron is a micronutrient, thus crops usually require a smaller amount of boron than secondary nutrients such as magnesium and calcium. A boron content below 1.0 weight% is often considered sufficient for most crops.

In some embodiments, the method further comprises a step of: f) coating the homogeneous particles obtained in step d) with a conditioning agent. Particles need to go through several handling steps before reaching the final user, farmers. After production, particles are often stored for extended period of times in big piles or in bags. They are then transported to a local warehouse or distributor by trucks, trains, or boats over long distances, and then delivered to the final user. It may be an advantage to apply a conditioning agent to the particles comprising calcium nitrate and magnesium to improve some properties of the particles, such as particle strength, caking ability, and water absorption, to ensure that the quality of the particles reaching the final user are as close as possible to the quality of the particles produced in the plant.

In some embodiments, the conditioning agent is a composition comprising a wax, a mineral oil, a resin, and optionally a viscoelastic elastomer. Conditioning agents may comprise a variety of components depending on the technical effect that the agent is trying to achieve and the composition of the particles on which the agent is applied. For calcium nitrate-based particles, it was found that a combination of a wax, a mineral oil, a resin, and optionally a viscoelastic elastomer, can reduce the water absorption rate of the particles. In some embodiments, the conditioning agent comprises from 10 to 50 weight% of wax, from 40 to 90 weight% of a mineral oil, from 1 to 15 weight% of a resin being soluble in mineral oil and miscible with the max and mineral oil, and 0.1 to 1.0 weight% of a viscoelastic elastomer selected from the group of polyisobutylene and styreneisoprene-styrene block copolymer which is soluble in mineral oil and has an average molecular weight of 30.000 to 5.000.000. In some embodiments, the conditioning agent comprises from 50 to 60 weight% of wax, from 30 to 40 weight% of oil, from 1 to 15 weight% of a resin being oil-soluble and miscible with the wax and the oil, and optionally 0.01 to 2.0 weight% of a viscoelastic elastomer which is soluble in the oil.

In a second aspect, the present disclosure provides a solid, homogeneous particle comprising from 10 to 20 weight% of nitrogen, from 15 to 30 weight% of calcium (expressed as CaO), and from 1.0 to 10 weight% of magnesium (expressed as MgO), based on the total weight of the particle.

In some embodiments, the solid, homogeneous particle comprises from 12 to 20 weight%, from 10 to 18 weight%, from 10 to 16 weight%, from 12 to 16 weight%, or from 14 to 16 weight% of nitrogen, based on the total weight of the particle. If the melt used to produce the particle comprises at least 90 weight% of calcium nitrate, the solid, homogeneous particle produced from this melt comprises at least 15 weight% of nitrogen. If the melt used to produce the particle comprises at least 80 weight% of calcium nitrate, the solid, homogeneous particle produced from this melt comprises at least 13 weight% of nitrogen. The nitrogen content of the solid, homogeneous particle can be varied depending on the exact requirements for different markets, different crops, and/or different soils.

In some embodiments, the solid, homogeneous particle comprises calcium nitrate and ammonium nitrate as nitrogen sources.

In some embodiments, the solid, homogeneous particle comprises from 15 to 30 weight%, from 10 to 30 weight%, from 15 to 28 weight%, from 17 to 30 weight%, or from 17 to 28 weight% of calcium, expressed as CaO, based on the total weight of the particle. The convention in the field of fertilizers is to express the content of nutrients, except for nitrogen, in a fertilizer product used the corresponding oxide of the nutrient. If the melt used to produce the particle comprises at least 90 weight% of calcium nitrate, the solid, homogeneous particle produced from this melt comprises at least 21 weight% of calcium. If the melt used to produce the particle comprises at least 80 weight% of calcium nitrate, the solid, homogeneous particle produced from this melt comprises at least 19 weight% of calcium. The calcium content of the solid, homogeneous particle can be varied depending on the exact requirements for different markets, different crops, and/or different soils.

In some embodiments, the solid, homogeneous particle comprises from 0.1 to 2.0 weight%, from 0.1 to 1.8, or from 0.1 to 1.0 weight% of water-soluble magnesium, expressed as MgO, based on the total weight of the particle.

In some embodiments, the solid, homogeneous particle comprises from 1.0 to 6.0 weight%, in particular from 2.0 to 5.0, in particular from 2.5 to 4.5 weight% of magnesium, expressed as MgO, based on the total weight of the particle.

In some embodiments, the solid, homogeneous particle comprises from 0.1 to 20 weight%, from 0.1 to 10 weight%, from 1.0 to 8.0 weight%, from 0.1 to 5.0 weight%, or from 1.0 to 5.0 weight% of ammonium nitrate.

In some embodiments, the solid, homogeneous particle has a particle size of from 2.0 to 4.0 mm, as measured by sieving stages.

In a third aspect, the present disclosure provides the use of a composition comprising the solid, homogeneous particles according to the first aspect as a fertilizer.

In a fourth aspect, the present disclosure provides a solids particulate composition comprising solid, homogeneous particles comprising from 10 to 20 weight% of nitrogen, from 15 to 30 weight% of calcium (expressed as CaO), from 1.0 to 10 weight% of magnesium (expressed as MgO), and from 0 to 1.0 weight% of magnesium nitrate.

### Reactivity test:

The reactivity of three sources of magnesium oxide, named MgA, MgB, MgC, and MgD was tested according to the following procedure. An aqueous solution containing 28 g/L of citric acid monohydrate, 0.25 g/L pf sodium benzoate, and 2 mL/L of phenolphthalein is prepared and heated up to 32 °C. 20 g/L of magnesium oxide is added at t = 0. The reaction is deemed complete when a color change of the solution is observed. The change of color was observed after 400 sec. (average over 3 tests) for MgA, 600 sec for MgB, and 740 seconds for MgD. After 30 minutes, no color change was observed for the solutions prepared with MgC.

The product MgD was crushed to obtain a median particle size of 15 µm, as measured by sieving (versus 1.0 mm for the uncrushed MgD product). The crushed MgD was tested with the same solubility tests and the color change was observed at t = 415 seconds.

### Solubility test:

1 g of calcium particles containing magnesium are mixed in a container with 25 mL of distilled water. The resulting mixture is filtered, and the solid residue is washed 3 times with distilled water. The water fraction is collected and its magnesium content is measured by ICP (Inductively Coupled Plasma spectroscopy). The solid residue is mixed with 100 mL of a neutral aqueous solution of ammonium citrate (2.2 M). The mixture is filtered and the solid residue is washed once with water. The magnesium content of the aqueous solutions is measured by ICP.

### Example 1:

Calcium nitrate crystals containing less than 10 weight% ammonium nitrate was heated up above its melting point (120-130 °C). The pH of the melt is measured at 7.0, after a 10-time dilution in water. 3.6 weight% of magnesium oxide with low reactivity, MgC, was added in the melt and mixed for 5 min at 105 °C before being cooled down to room temperature. The cool melt can be broken into particles. A small sample of the solid is diluted in water, and the pH of the solution is measured at 9.0. Alternatively, the melt can be granulated or prilled using standard techniques. The total magnesium content was measured by atomic absorption spectrometry (3.6 weight%), and the content in water-soluble magnesium was measured according to European regulation EC2003/2003 (atomic absorption spectrometry after 30 min of boiling the material in water). The analysis showed a water-soluble magnesium content of 0.6 weight%.

### Example 2:

Calcium nitrate crystals containing less than 10 weight% of ammonium nitrate was heated up above its melting point. 4.1 weight% of magnesium oxide with low reactivity, MgC, was added in the melt and mixed for 15 min at 105 °C before being cooled down to room temperature. The cool melt can be broken into particles. Alternatively, the melt can be granulated or prilled using standard techniques. The analysis performed as in example 1 showed a water-soluble magnesium content of 0.7 weight%, based on the total weight of the particles.

### Example 3:

Calcium nitrate crystals containing less than 10 weight% ammonium nitrate was heated up above its melting point. 2.0 weight% of borax and 3.0 weight% of the magnesium oxide, MgD, were added in the melt and mixed at 120 °C until homogeneous. The melt was granulated in a fluidized bed granulator to yield granules with a particle size ranging from 2.5 to 5.0 mm. The particles were analyzed: the total magnesium content, expressed as MgO, was found to be 2.7 weight%, based on the total weight of the particles, the amount of water-soluble magnesium, expressed as MgO, was 1.6 weight%, based on the total weight of the particles. Among the water-soluble magnesium content, magnesium nitrate was identified, and its content was measured at 0.3 weight%, based on the total weight of the particles.

### Example 4:

The products produced in examples 2 and 3, and similarly with another source of magnesium oxide, were tested in agronomic trials. Radish seeds were placed in pots containing soil. The complete nutrient requirements were added to the pots, except for calcium and magnesium, at sowing time. For the control plants, calcium nitrate particles were used to provide 50% of the calcium requirement and an aqueous solution of magnesium sulfate (which is fully water-soluble) was added at various rates. For the test plants, the calcium particles containing magnesium at different rates (2 weight%, 4 weight%, and 6 weight% of magnesium oxide based on the total weight of the particles) prepared in examples 2 and 3, and with a third source of magnesium, were given. The amount of magnesium comprised in particles prepared with 6 weight% of magnesium oxide corresponds to 75% of the standard magnesium recommendation. 14 days after sowing, the same amount of calcium nitrate particles, and the magnesium sulfate solution for the test plants, were added to the soil. 25 days after sowing, the chlorophyll content of the leaves was measured using a Konica Minolta chlorophyll meter SPAD. The results are provided in table 1 below.

| **Entry** | **Treatment** | **Mg content (in % of standard recommendation)** | **SPAD measurement** |
|---|---|---|---|
| 1 | CN | 0 | 31.0 |
| 2 | CN + Mg solution | 12.5 | 30.9 |
| 3 | CN + Mg solution | 25 | 32.4 |
| 4 | CN + Mg solution | 50 | 33.0 |
| 5 | CN + Mg solution | 75 | 32.9 |
| 6 | CN + Mg solution | 100 | 34.1 |
| 7 | CN + MgO (2 weight%) particles | 25 | 32.1 |
| 8 | CN + MgO (4 weight%) particles | 50 | 34.1 |
| 9 | CN + MgO (6 weight%) particles | 75 | 35.0 |
| 10 | CN + B particles | 0 | 34.4 |
| 10 | CN + B + MgO (2 weight%) particles | 25 | 34.7 |
| 11 | CN + B + MgO (4 weight%) particles | 50 | 33.9 |
| 12 | CN + B + MgO (6 weight%) particles | 75 | 34.4 |

It can be seen that the particles containing calcium nitrate and magnesium perform as well as the combination of calcium nitrate and magnesium solution. The particles comprising 6 weight% of magnesium provide 75% of the recommended magnesium dose, but perform as well as the plants that received 100% of the recommended magnesium dose as aqueous solution.

## Claims

1. A method for producing a solid, particulate composition comprising solid, homogeneous particles, wherein the solid, particulate composition comprises from 1.0 to 10 weight% of magnesium, the method comprising the steps of:
a) providing a melt comprising from 50 to 100 weight% of calcium nitrate, and from 0 to 1.0 weight% of a strong acid;
b) adding magnesium oxide to the melt provided in step a);
c) mixing the melt obtained in step b) thereby obtaining a homogeneous melt; and
d) solidifying the homogeneous melt obtained in step c) into a solid, particulate composition comprising solid, homogeneous particles.

2. The method according to claim 1, wherein the solid, particulate composition obtained in step d) comprises from 5% to 60% of water-soluble magnesium, based on the total magnesium content of the solid, particulate composition.

3. The method according to claim 1, wherein the solid, particulate composition obtained in step d) comprises from 30% to 100% of magnesium soluble in a neutral aqueous solution of ammonium citrate, based on the total magnesium content of the solid, particulate composition.

4. The method according to any one of claims 1 to 3, wherein the solid, particulate composition obtained in step d) comprises from 1.0 to 6.0 weight%, in particular from 2.0 to 5.0, in particular from 2.5 to 4.5 weight% of magnesium.

5. The method according to any one of claims 1 to 4, wherein the method further comprises a step of:
e) adding to the melt a source of boron, in particular boron oxide or borax, wherein step e) occurs before step b), between step b) and step c), or during step b).

6. The method according to claim 5, wherein step e) is performed such that the solid, particulate composition obtained in step d) comprises from 0.1 to 1.0 weight% of boron.

7. The method according to any one of claims 1 to 6, wherein the melt provided in step a) has a pH ranging from 5.5 to 7.5.

8. The method according to any one of claims 1 to 7, wherein the melt provided in step a) comprises from 70 to 100 weight%, or from 80 to 100 weight%, of calcium nitrate.

9. The method according to any one of claims 1 to 8, wherein the melt provided in step a) comprises from 0.1 to 10 weight%, from 0.1 to 5.0 weight%, or from 0.5 to 5.0 weight% of ammonium nitrate.

10. The method according to any one of claims 1 to 9, wherein the melt provided in step a) comprises from 0 to 0.5 weight% of the strong acid, in particular wherein the strong acid is nitric acid.

11. The method according to any one of claims 1 to 10, wherein the method further comprises a step of:
f) coating the homogeneous particles obtained in step d) with a conditioning agent.

12. The method according to claim 11, wherein the conditioning agent is a composition comprising a wax, a mineral oil, a resin, and a viscoelastic elastomer.

13. A solid, homogeneous particle comprising from 10 to 20 weight% of nitrogen, from 15 to 30 weight% of calcium (expressed as CaO), and from 1.0 to 10 weight% of magnesium (expressed as MgO), based on the total weight of the particle.

14. The solid, homogeneous particle according to claim 13, further comprising from 0 to 1.0 weight% of magnesium nitrate.

15. Use of a solid, particulate composition comprising the solid, homogeneous particles according to claim 14 as a fertilizer.
